# EUROPÄISCHE PATENTSCHRIFT

(11) **EP 1 951 641 B1**
(45) Veröffentlichungstag und Bekanntmachung des Hinweises auf die Patenterteilung: **09.12.2009**
(21) Anmeldenummer: 06804839.6
(22) Anmeldetag: 30.10.2006
(51) Int. Cl.: C04B 38/06, C04B 41/87, G01N 27/26, H01M 8/12

(54) **VERFAHREN ZUR HERSTELLUNG EINES PORÖSEN KERAMISCHEN DÜNNFILMS**
PROCESS FOR PRODUCING A POROUS CERAMIC THIN FILM
PROCÉDÉ DE FABRICATION D'UN MINCE FILM CÉRAMIQUE POREUX

(30) Priorität: 21.11.2005 CH 18512005
(43) Veröffentlichungstag der Anmeldung: 06.08.2008
(73) Patentinhaber: Eidgenössische Technische Hochschule Zürich, 8092 Zürich (CH)
(72) Erfinder: BECKEL, Daniel, CH-8046 Zürich (CH); GAUCKLER, Ludwig, J., CH-8049 Zürich (CH)
(74) Vertreter: Roshardt, Werner Alfred
(86) Internationale Anmeldenummer: PCT/CH2006/000605
(87) Internationale Veröffentlichungsnummer: WO 2007/056876

(56) Entgegenhaltungen:
- DE-A1- 4 343 315
- DE-A1- 10 324 583
- US-B1- 6 284 314

## Beschreibung

### Technisches Gebiet

Die Erfindung bezieht sich auf ein Verfahren zum Beschichten eines flächig ausgebildeten Substrats mit wenigstens einem Dünnfilm aus wenigstens einer porösen keramischen Schicht und auf Anwendungen des Verfahrens.

### Stand der Technik

Dünnfilme, insbesondere elektrisch leitende, aus keramischen Materialien gewinnen laufend an Bedeutung. Die Dünnfilme bestehen in der Regel aus mehreren Schichten, insbesondere drei bis fünf, wobei das Material und/oder die Morphologie der einzelnen Schichten meist unterschiedlich sind. Der Dünnfilm wird in der Praxis schichtweise auf einem Substrat abgeschieden, wobei übliche Dünnfilm-Techniken eingesetzt werden. Das Abscheiden erfolgt beispielsweise durch chemische Abscheidung aus der Gasphase, gepulste Laserbedampfung, Sol-Gel-Verfahren, insbesondere Rotationsbeschichtung, oder Sprühpyrolyse. Nach oder während des Aufbringens werden die Schichten oder der Dünnfilm insgesamt in einem ein- oder mehrstufigen Prozess geglüht, um eine teil- oder vollkristalline Mikrostruktur zu erhalten.

Aus der US 6284314 B1 ist ein poröser keramischer Film mit Mikroporen einheitlichen Durchmessers bekannt. Die Schicht wird aus einem keramischen Sol mit Polyethylenglycol oder Polyethylenoxid abgeschieden und dann das Substrat geheizt. Dieser poröse keramische Film wird als Katalysator oder als Katalysatorträger gebraucht. Ein aus Titanoxid bestehender Keramikfilm ist besonders wertvoll als Fotokatalysator für die Zersetzung von schädlichen oder übelriechenden Substanzen.

Die US 2004/0166340 A1 beschreibt ein Verfahren zum Abscheiden von Dünnfilmbeschichtungen aus poröser Keramik, welche Metallpartikel und durch den angewendeten Prozess erzeugte Verbundwerkstoffe enthalten. Dieser Prozess beinhaltet das Aufbringen von Lösungen mit anorganischen Edukten aus poröser Keramik und organischen Edukten mit wenigstens einer metallhaltigen Komponente auf ein Substrat, das Trocknen und Zersetzen der Edukte zur Bildung eines Verbundwerkstoffs. Die erhaltenen Verbundwerkstoffe können bezüglich der Morphologie in einem weiten Bereich variieren, abhängig von den physikalischen Eigenschaften des Substrates, den keramischen Edukten und den Nachbehandlungsverfahren. Das Verfahren dient der Herstellung von Katalysatoren, Gassensoren und zur Abscheidung dünner Metallfilme und weiteren Anwendungen.

### Darstellung der Erfindung

Der vorliegenden Erfindung liegt die Aufgabe zugrunde, ein Verfahren der eingangs genannten Art zu schaffen, welches einfacher und mit niedrigeren Investitionskosten durchzuführen ist und ein breites Anwendungsspektrum eröffnet.

Bezüglich des Verfahrens wird die Aufgabe erfindungsgemäss dadurch gelöst, dass eine Lösung oder eine Suspension eines organischen und/oder anorganischen Metallverbunds mit einem eingemischten, nicht löslichen Porenbildner versetzt, das Gemisch als Schicht eines Dünnfilms aufgesprüht und der Porenbildner unter Ausbildung einer offenporigen Struktur thermisch zersetzt und/oder ausgebrannt wird. Spezielle und weiterbildende Ausführungsformen des Verfahrens sind Gegenstand von abhängigen Patentansprüchen.

Dieses Sprühpyrolyse genannte Verfahren ist sehr einfach und wirtschaftlich, es kann mit ausserordentlich preiswerten Vorrichtungen realisiert werden. Das keramikbildende Ausgangsmaterial wird in einem geeigneten Lösungsmittel ganz oder teilweise gelöst, es wird eine Lösung oder Suspension erhalten. Der Porenbildner wird dieser Lösung oder Suspension in Form von Partikeln oder als Suspension zugegeben. Ein flüssiger Porenbildner darf weder in der Lösung löslich sein, noch sich mit dieser homogen vermischen. Mit andern Worten wird durch die Zugabe eines flüssigen Porenbildners eine Emulsion gebildet.

Der Gewichtsanteil des Porenbildners kann sich in einem weiten Spektrum bewegen, von 0,001 bis 70% des Ausgangsmaterials für die Keramik. Die Effizienz des Verfahrens wird erhöht, wenn der Porenbildner regelmässig im Ausgangsmaterial verteilt wird, beispielsweise mittels eines Rührers.

Als metallische Komponente des Ausgangsmaterials bietet sich ein breites Spektrum an, insbesondere ein Alkalimetall, Erdalkalimetall, Lanthanoid, Aktinoid, Übergangsmetall oder Halbmetall. Die einzelnen Metalle können dem periodischen System der Elemente entnommen werden.

Für die Ausbildung eines Metallverbunds sind sowohl anorganische als auch organische Komponenten einsetzbar. Anorganische Komponenten sind insbesondere ein Halogenid, nämlich ein Fluorid, Chlorid oder Bromid, ein Oxid, Hydroxid, Nitrat, Sulfat oder Perchlorat. Als organische Komponenten bieten sich insbesondere ein Acetat, Acetylacetonat, Format, Carbonat oder Ethoxid, an. Das Ausgangsmaterial kann sowohl aus einem einzelnen anorganischen oder organischen Metallverbund, jedoch auch aus beliebigen Anteilen aller drei Komponenten bestehen.

Für die Herstellung der Lösungen oder Suspensionen werden wässrige und/oder übliche organische Lösungsmittel eingesetzt und spezifisch nach den eingesetzten Metallverbünden ausgewählt. Es werden auch arbeitsplatzhygienische und umweltbelastende Aspekte berücksichtigt, mit anderen Worten wenn möglich Wasser oder unbedenkliche organische Lösungsmittel eingesetzt.

Der zur Lösung oder Suspension der Ausgangsmaterialien eingemischte Porenbildner muss wenigstens teilweise thermisch zersetzbar oder brennbar sein. Aus dem Bereich der anorganischen Materialien eignet sich dazu vorzugsweise feindisperser Kohlenstoff, insbesondere in Form von amorphem Russ oder hexagonalem Graphit, aus dem Bereich der organischen Stoffe werde zweckmässig Polymere eingesetzt, vorzugsweise mit einer molaren Masse von weniger als 6000 g/mol, insbesondere weniger als 1000 g/mol. Zu diesen Stoffen zählen beispielsweise Polycarbonat und/oder Polystyrol. Wie die anorganischen Materialien sind die Polymere feindispers, insbesondere submikron, ausgebildet, da deren Grösse den späteren Porendurchmesser im Dünnfilm massgebend mitbestimmt.

Es können auch flüssige Porenbildner eingesetzt werden, beispielsweise Ethylenglycol, welche sich jedoch mit dem Lösungsmittel nicht homogen mischen dürfen. Beim Aufsprühen müssen Tröpfchen des Porenbildners entstehen, die etwa der Grösse des feindispersen Porenbildners entsprechen.

Der Gewichtsanteil des Porenbildners, in welcher Form er auch aufgesprüht wird, liegt im Bereich von 0,001 bis 70% des Ausgangsmaterials.

In das aufgesprühte Gemisch können auch weitere feinkörnige Partikel eingemischt werden, insbesondere Metall- und/oder Legierungspartikel, wenn eine Dünnschicht mit guter elektrischer Leitfähigkeit erwünscht ist. Die elektrische Leitfähigkeit kann zusätzlich verbessert werden, wenn der Dünnfilm imprägniert oder mit einer metallischen Schicht belegt wird.

Das Aufsprühen erfolgt so lange, bis eine Schichtdicke erreicht wird, die den 0,5 bis 20-fachen Porendurchmesser aufweist. Dies entspricht in der Praxis einer Schichtdicke von 5 bis 10'000 nm.

Das Aufsprühen des Gemischs erfolgt vorzugsweise mittels Gaszerstäubung, insbesondre mittels Druckluft, elektrostatischer oder Ultraschallzerstäubung. Der bei der Gaszerstäubung angewendete Druck liegt vorzugsweise bei wenigstens etwa 0,5 bar, insbesondere erfolgt das Gaszerstäuben mit einem Druck von 1,5 bis 3 bar. Der Tröpfchendurchmesser der aufgesprühten Dispersion liegt zweckmässig in einem Bereich von 1 bis 150 µm, insbesondere 2 bis 6 µm. Die Partikelgrösse des Porenbildners liegt vorzugsweise im submikronen Bereich.

Als Substrat ist an sich jedes temperaturbeständige Material einer gewissen mechanischen Festigkeit geeignet. Das Substrat kann in dichter oder poröser Form vorliegen. Die Porosität kann sich über die ganze Fläche oder Teile davon erstrecken. Weiter kann das Substrat flexibel, beispielsweise als Folie, oder starr, beispielsweise als Platte, ausgebildet sein.

Es kann ein einziger Dünnfilm mit einer Schicht, ein Dünnfilm mit mehreren Schichten oder mehrere Dünnfilme aufgesprüht werden, auch mit nicht porösen Zwischenschichten. Die einzelnen Dünnfilme bzw. deren Schichten werden vor der nächsten Beschichtung vorzugsweise zumindest soweit abgetrocknet, dass Durchmischungen und/oder Diffusionsprozesse minimalisiert oder verhindert werden. Beispielsweise beim Auftragen von anodischen, kathodischen und Elektrolytschichten können derartige Durchmischungen bzw. Diffusionsprozesse nachteilig sein.

Bei bandförmigen, flexiblen Substraten können die einzelnen Schichten auch schrittweise, in einem Durchlaufverfahren, aufgesprüht und zersetzt und/oder ausgebrannt werden. Das Band durchläuft dabei alternierend Aufsprüh- und thermische Anlagen.

Die wenigstens teilweise thermische Zersetzung oder das Ausbrennen der Porenbildner erfolgt in der Praxis meist bei einer Temperatur von wenigstens etwa 100°C, vorzugsweise im Bereich von 100 bis 500°C, insbesondere im Bereich von 250 bis 350°C. Wahlweise kann das Substrat während des Aufsprühvorgangs direkt auf die Pyrolysetemperatur, also auf die Temperatur der thermischen Zersetzung oder Verbrennung des Porenbildners, geheizt werden. Ferner kann der Dünnfilm nach der Pyrolyse noch einer weiteren thermischen Behandlung zwischen 500°C und 1200°C, vorzugsweise zwischen 600°C und 800°C, unterzogen werden, um den anfangs möglicherweise wenigstens teilweise amorphen keramischen Dünnfilm zu kristallisieren.

Mit dem erfindungsgemässen Verfahren werden insbesondere poröse keramische Dünnfilme einer Dicke von 1 bis 10'000 nm erhalten, welche eine Korngrösse zwischen 0,5 und 3'000 nm haben. Die Poren haben einen mittleren Durchmesser, welcher der Grössenordnung der mittleren Korngrösse entspricht. Die Porosität schwankt in einem Bereich von 3 bis 80 Vol. %, wobei mindestens ein Teil Porosität offen ausgebildet ist.

Das erfindungsgemässe Verfahren kann mannigfaltig angewendet werden, beispielsweise bei der Herstellung von elektrochemisch aktiven Schichten, Elektroden, Haftschichten, Gasdiffusionsschichten und mechanischen Schutzschichten. Von besonderem Interesse ist die Anwendung des Verfahrens bei der Herstellung von miniaturisierten Geräten, insbesondere Brennstoffzellen und Gassensoren. Die Kathoden für Festoxid-Brennstoffzellen SOFC müssen porös sein, um Reaktionen mit einem Gasraum zu ermöglichen. Selbstverständlich müssen sie auch elektrisch leitfähig sein. Diese Kathoden aus einer keramischen Dünnschicht bestehen beispielsweise aus La_{0.6}Sr_{0.4}Co_{0.2}Fe_{0.8}O₃.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird anhand der in der Zeichnung beschriebenen Ausführungsbeispiele, welche auch Gegenstand von abhängigen Patentansprüchen sind, näher erläutert. Es zeigen schematisch:
- Fig. 1: einen Verfahrensablauf einer Sprühpyrolyse,
- Fig. 2: einen miniaturisierten Sensor,
- Fig. 3: eine Elektrodenkonfiguartion einer miniaturisierten Festoxid-Brenn-stoffzelle,
- Fig. 4: die elektrische Gesamtleitfähigkeit eines Dünnfilms bei zunehmendem Anteil Porenbildner,
- Fig. 5: eine Variante von Fig. 4, und
- Fig. 6: die Leistung einer porösen Dünnfilmkathode.

Grundsätzlich sind in den Figuren gleiche Teile mit gleichen Bezugszeichen versehen.

### Wege zur Ausführung der Erfindung

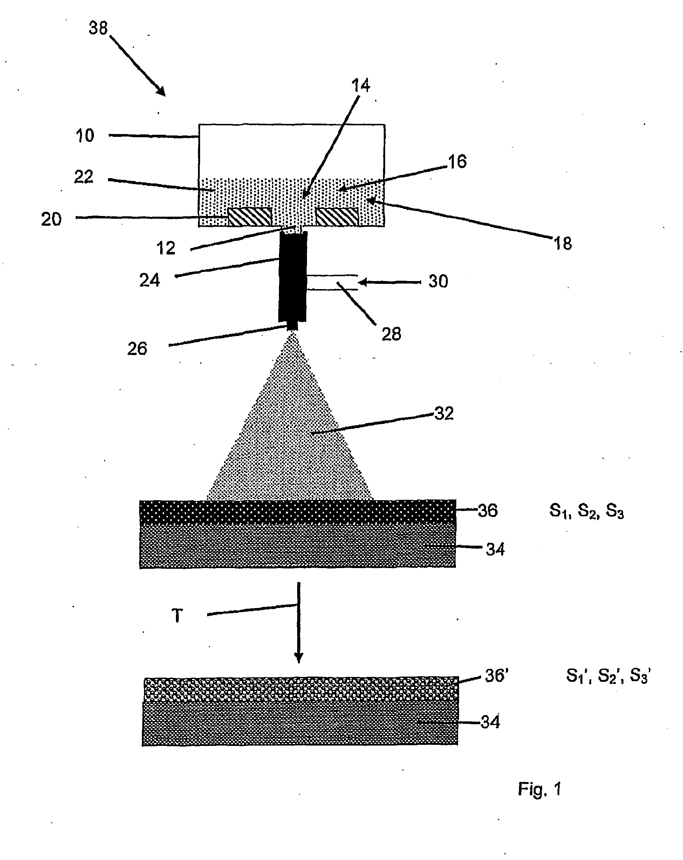

Fig. 1 zeigt ein Gefäss 10 mit einem verschliessbaren Abflussstutzen 12, in welches organische und/oder anorganische Metallverbünde als Ausgangsmaterialien 14, ein Lösungsmittel 16 und ein Porenbildner 18 gegeben werden. Beispiele für diese drei Komponenten und ihre Anteile in [mol/l] werden in der nachfolgenden Tabelle 1 aufgeführt. Im Gefäss 10 sind mechanisch oder magnetisch betätigbare Rührer 20 angeordnet, diese erzeugen ein Gemisch 22 aus den im Lösungsmittel 16 wenigstens teilweise gelösten Ausgangsmaterialien 14 und dem nicht löslichen Porenbildner 18. Bei der Zugabe eines festen Porenbildners 18 entsteht eine Suspension, das Gemisch 22, mit einer flüssigen Phase aus dem Lösungsmittel 16 oder einer Lösung des in die flüssige Phase überführten Ausgangsmaterials 14 und die erwähnte feindispergierte feste Phase. Bei der Zugabe eines flüssigen Porenbildners 18 wird eine Emulsion gebildet, falls die Ausgangsmaterialien 14 vollständig gelöst sind.

Der Abflussstutzen 12 des Gefässes 10 leitet das Gemisch 22 in eine Sprüheinrichtung 24 mit einer Zerstäuberdüse 26. Die Sprüheinrichtung 24 umfasst einen seitlichen Gaseintrittsstutzen 28, in der Regel für Pressluft 30, welche einen Sprühkegel 32 des Gemischs 22 erzeugt.

Der Sprühkegel 32 beaufschlagt ein ortsfestes oder durchlaufendes Substrat 34 und bildet einen Dünnfilm 36 bzw. eine Schicht S₁, S₂ oder S₃ davon. Die Dicke der aufgetragenen Schicht hängt von mehreren Parametern ab, beispielsweise der Zeitdauer des Aufsprühens, der aufgesprühten Menge pro Zeit- und Flächeneinheit, der Durchlaufgeschwindigkeit eines wandernden Substrats.

Mit dem Pfeil T wird eine Wärmebehandlung mit einer Temperatur T von vorliegend etwa 300°C angedeutet, wodurch der Porenbildner 18 zersetzt oder ausgebrannt wird. Dabei entsteht ein poröser, keramischer Dünnfilm 36', welcher aus wenigstens einer porösen, keramischen Schicht S'₁, S'₂, S'₃ besteht.

In Fig. 1 ist das Herstellen eines porösen Dünnfilms 36' durch Sprühpyrolyse in einem stationären Verfahren dargestellt. Nach einer bereits erwähnten, nicht dargestellten Variante von Fig. 1 ist ein durchlaufendes Substrat angeordnet, welches eine der Anzahl herzustellender poröser, keramischer Dünnfilme 36' mit den Schichten S'₁, S'₂, S'₃,... entsprechenden Anzahl Vorrichtungen 38 für die Sprühpyrolyse und damit alternierend Wärmebehandlungseinrichtungen für das Zersetzen oder Ausbrennen der Porenbildner mit einer in Tabelle 1 angegebenen Temperatur [°C] angeordnet sind.

Eine Vorrichtung für die Sprühpyrolyse lässt zahlreiche Varianten offen, so können vorerst das Ausgangsmaterial 14 und das Lösungsmittel 16 in das Gefäss 10 gegeben werden, der Porenbildner 18 erst nach intensivem Rühren. Die Zerstäuberdüse 26 kann auswechselbar ausgebildet sein, danach kann die geometrische Ausbildung des Sprühkegels 32 und der Durchfluss variiert werden. Auch der Abstand der Zerstäuberdüse 26 vom Substrat 34 ist zweckmässig einstellbar.

Die Variation des Ausgangsmaterials 14, des Lösungsmittels 16, des Porenbildners 18 und der Pyrolysetemperatur T wird anhand der nachfolgenden Tabelle 1 aufgezeigt.

**Tabelle 1**

| Ausgangsmaterial [mol/l] | Porenbildner [g/l] | Lösungsmittel [Volumenverhältnis] | Pyrolyse-temperatur T [°C] |
|---|---|---|---|
| 0.016 Ce(NO₃)₃·6H₂O, 0.004 Gd(NO₃)_{3·}6H₂O | 3 Graphit | 1/3 Ethanol, 1/3 1-Methoxy-2-propanol, 1/3 Diethylenglycol-monobutylether | 300 |
| 0.006 La(NO₃)₃·6H₂O, 0.004 SrCl₂·6H₂O, 0.002 Co(NO₃)₂·6H₂O 0.008 Fe(NO₃)₃·9H₂O | 0.006 Russ | 1/3 Ethanol, 2/3 Diethylenglycol-monobutylether | 270 |
| 0.005 Ba(NO₃)₂, 0.005 Sr(NO₃)₂, 0.008 Co(NO₃)₂·6H₂O 0.002 Fe(NO₃)₃·9H₂O | 0.5 Russ | 1/3 Ethanol, 2/3 Wasser | 155 |

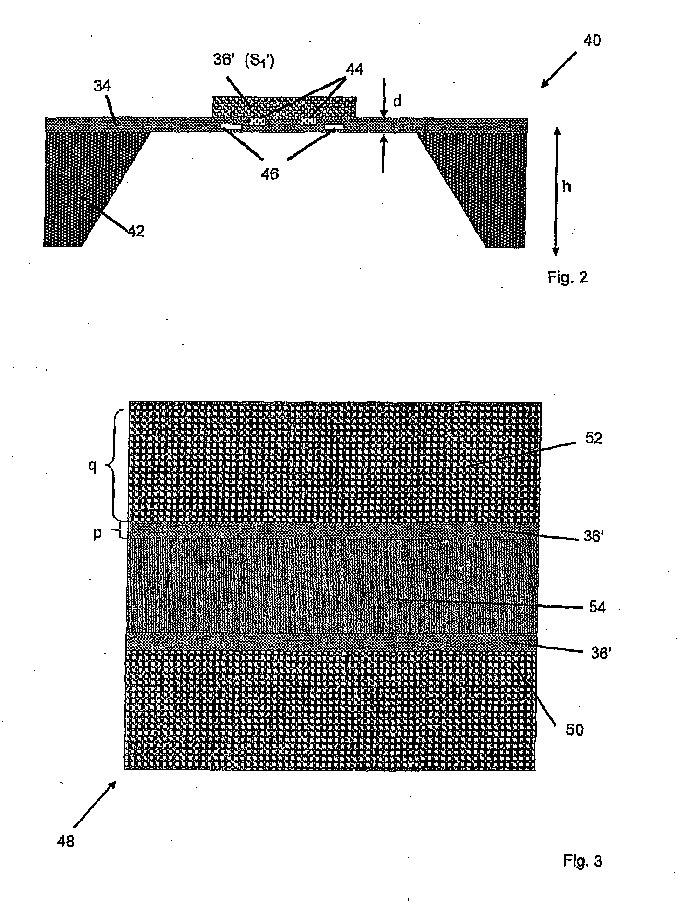

Fig. 2 zeigt einen miniaturisierten Sensor 40 auf einer Micro-Hotplate 42. Auf diesem Stützfundament ist ein mechanisch stabiles Substrat 34 aus Siliziumnitrid aufgebracht, welches mit einem porösen keramischen Dünnfilm 36' aus einer Schicht S₁' eine Membrane bildet. Im Bereich des Dünnfilms 36', vorliegend aus Zinnoxid, sind metallische Elektroden 44 angeordnet, welche die detektierten Signale zur Verwertung weiterleiten. Weiter sind im Substrat 34 im Bereich des porösen keramischen Dünnfilms 36' zwei Heizelemente 46, vorliegend aus Platin, angeordnet. Die Dicke d des Substrats 34 ist stark überhöht gezeichnet, sie liegt bei etwa 1 µm, die Höhe h des miniaturisierten Sensors 40 bei etwa 400 µm, dessen Breite bei etwa 1000 µm.

In Fig. 3 ist eine laminatförmige Elektrodenkonfiguration 48 einer an sich bekannten Festoxid-Brennstoffzelle SOFC in Form eines teilweisen Querschnitts dargestellt. Die Laminatstruktur umfasst eine poröse Dickfilmanode 50 eine poröse Dickfilmkathode 52 und einen dazwischen liegenden Dickfilmelektrolyten 54, alle drei Schichten sind ebenfalls an sich bekannt und werden in Feststoff Brennstoffzellen eingesetzt. Gemäss Fig. 3 ist zwischen der porösen Dickfilmanode 50 und dem Dickfilmelektrolyten 54 sowie zwischen der porösen Dickfilmkathode 52 und dem Dickfilmelektrolyten 54 je ein poröser keramischer Dünnfilm 36' gemäss der vorliegenden Erfindung angeordnet. Durch die feine Struktur der porösen keramischen Dünnfilme 36' wird ein wesentlich besserer Kontakt zu der gasdichten Dickfilmelektrolytschicht 54 hergestellt als dies die dicken grobkörnigen Standardelektroden alleine könnten. Durch die feinporöse Struktur wird gleichzeitig gewährleistet, dass der Gaszutritt nicht blockiert wird. Dadurch findet ebenfalls eine Leistungssteigerung statt. Das Dickenverhältnis der erfindungsgemässen Schichten 36' zu den bekannten Dickfilmschichten 50, 52, 54 liegt bei etwa 1:100. Vorliegend liegt die Schichtdicke p der Dünnschichten 36' bei 300 nm, die Schichtdicke q der Dickfilmelektroden bei etwa 30 µm.

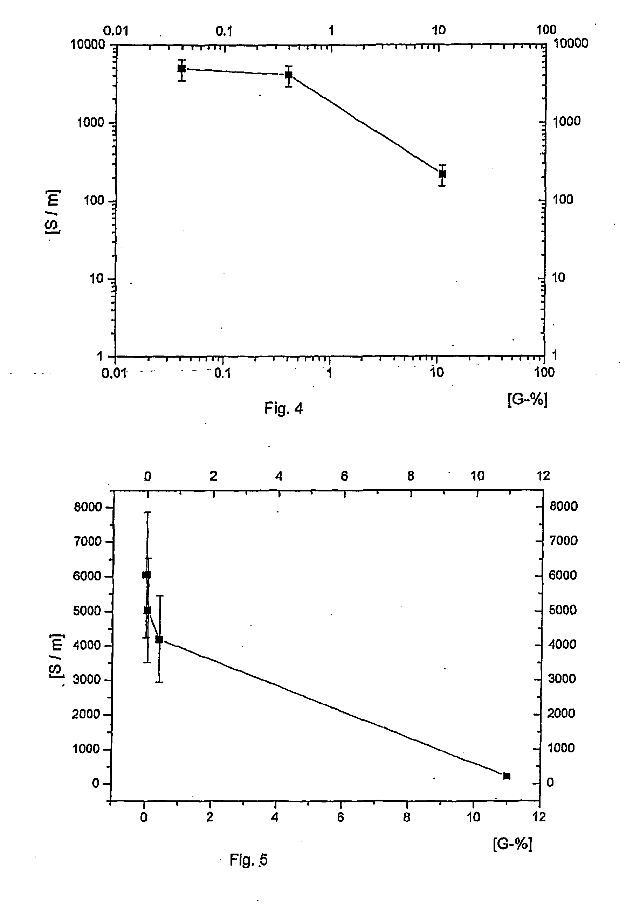

In Fig. 4 und 5 ist der Zusammenhang zwischen der elektrischen Leitfähigkeit [S/m] in Funktion der Menge [G-%] für einen kathodischen porösen keramischen Dünnfilm 36' aufgezeigt. Die aufgetragenen Werte beziehen sich auf die Gesamtleitfähigkeit eines La_{0.6} Sr_{0.4}Co_{0.2}Fe_{0.8}O₃ -Dünnfilms. Durch den erhöhten Anteil von Porenbildnern 18 bzw. die erhöhte Porosität wird zudem die Leistung der Kathode erheblich gesteigert.

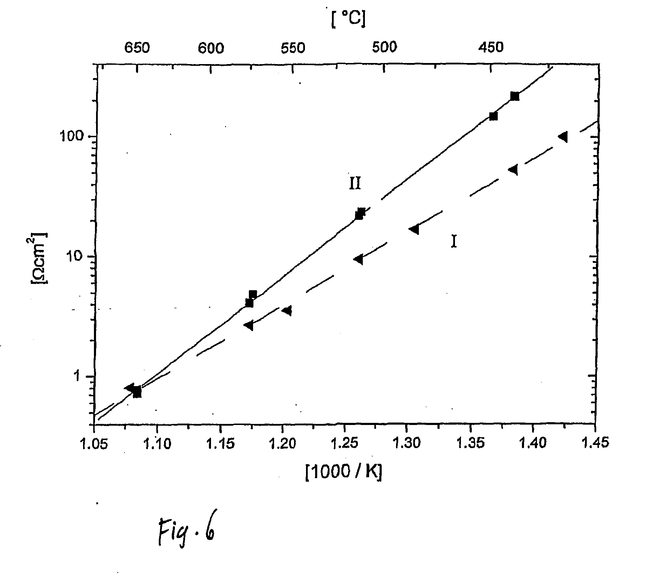

Dies ist aus Fig. 6 ersichtlich, wo der Polarisationswiderstand [Ωcm²] gegen die Temperatur [°C] bzw. gegen die reziproke absolute Temperatur [1000/°K] aufgetragen ist.

Die Kurve I, welcher eine keramische Dünnfilmkathode 36' mit Porenbildnern 18 (Fig. 1) zugrunde liegt, zeigt einen niedrigeren Polarisationswiderstand [Ωcm²] und damit die bessere Leistung als diejenige einer Dünnfilmkathode 36' ohne Porenbildner gemäss Kurve II.

## Patentansprüche

1. Verfahren zum Beschichten eines flächig ausgebildeten Substrats (34) mit wenigstens einem Dünnfilm (36') aus wenigstens einer porösen keramischen Schicht (S'₁, S'₂, S'₃),
**dadurch gekennzeichnet, dass**
eine Lösung oder eine Suspension eines organischen und/oder anorganischen Metallverbunds als Ausgangsmaterial (14) mit einem eingemischten, nicht löslichen Porenbildner (18) versetzt, das Gemisch (22) als Schicht (S₁, S₂, S₃), eines Dünnfilms (36) aufgesprüht, und der Porenbildner (18) unter Ausbildung einer wenigstens teilweise offenporigen Struktur wenigstens teilweise thermisch zersetzt und/oder ausgebrannt wird.

2. Verfahren nach Anspruch 1, **dadurch gekennzeichnet, dass** das Aufsprühen des Gemischs (22) mittels Gaszerstäubung, vorzugsweise mittels Pressluft (30), elektrostatischer oder Ultraschallzerstäubung erfolgt.

3. Verfahren nach Anspruch 2, **dadurch gekennzeichnet, dass** die Gaszerstäubung des Gemischs (22) mit einem Druck von wenigstens etwa 0,5 bar, vorzugsweise mit 1,5 bis 3 bar, erfolgt.

4. Verfahren nach einem der Ansprüche 1 bis 3, **dadurch gekennzeichnet, dass** das Gemisch (22) mit einem Tröpfchendurchmesser von 1 bis 150 µm, vorzugsweise 2 bis 6 µm, aufgesprüht wird.

5. Verfahren nach einem der Ansprüche 1 bis 4, **dadurch gekennzeichnet, dass** das Gemisch (22) mit einem Ausgangsmaterial (14) mit wenigstens einer metallischen Komponente aus einem Alkalimetall, Erdalkalimetall, Lanthanoid, Actinoid, Übergangsmetall oder Halbmetall, und einer anorganischen Komponente aus einem Halogenid, Oxid, Hydroxid, Nitrat, Sulfat oder Perchlorat und/oder einer organischen Komponente aus einem Acetat, Acatylacetonat, Format, Oxalat, Carbonat oder Ethoxid aufgesprüht wird.

6. Verfahren nach einem der Ansprüche 1 bis 5, **dadurch gekennzeichnet, dass** das Gemisch (22) mit dem wenigstens eine thermisch zersetzbare oder brennbare Substanz umfassenden Porenbildner (18) aus feindispersem Kohlenstoff, insbesondere Russ oder Graphit, oder aus einem organischen Stoff, vorzugsweise einem Polymer, mit einer molaren Mass von < 6000 g/Mol, insbesondere < 1000 g/Mol, aufgesprüht wird.

7. Verfahren nach Anspruch 6, **dadurch gekennzeichnet, dass** das Substrat (34) während des Aufsprühens direkt auf die Pyrolysetemperatur (T) geheizt wird.

8. Verfahren nach einem der Ansprüche 1 bis 7, **dadurch gekennzeichnet, dass** das Gemisch (22) mit einem Gewichtsanteil des Porenbildners von 0,001 bis 70% des Ausgangsmaterials (14) und einer Korngrösse von höchstens 10'000 nm, vorzugsweise höchstens 200 nm, aufgesprüht wird, bis eine Schichtdicke des 0,5 bis 50-fachen Porendurchmessers erreicht wird.

9. Verfahren nach einem der Ansprüche 1 bis 8, **dadurch gekennzeichnet, dass** ein mit Metall- und/oder Legierungspartikeln dotiertes Gemisch (22) aufgesprüht wird.

10. Verfahren nach einem der Ansprüche 1 bis 9, **dadurch gekennzeichnet, dass** der Porenbildner (18) bei einer Temperatur von wenigstens 100°C, vorzugsweise bei 100 bis 500°C, insbesondere bei 250 bis 350°C, zersetzt und/oder ausgebrannt wird.

11. Verfahren nach einem der Ansprüche 1 bis 10, **dadurch gekennzeichnet, dass** der Dünnfilm (36') nach der Pyrolyse noch einer weiteren thermischen Behandlung unterzogen wird, vorzugsweise zwischen 500°C und 1200°C, insbesondere zwischen 600°C und 800°C.

12. Anwendung des Verfahrens nach einem der Ansprüche 1 bis 11 zur Herstellung von miniaturisierten Geräten, insbesondere Brennstoffzellen und Gassensoren (40), elektrochemisch aktive Schichten, Elektroden, Haftschichten, Gasdiffusionsschichten und mechanische Schutzschichten.

## Claims

1. Method for coating a flat substrate (34) with at least one thin film (36') composed of at least one porous ceramic layer (S'₁, S'₂, S'₃),
**characterized in that**
a solution or a suspension of an organic and/or an inorganic metal compound is used as a raw material (14) with a mixed-in non-soluble pore former (18), the mixture (22) is sprayed on as a layer (S₁, S₂, S₃) of a thin film (36), and the pore former (18) is at least partially thermally decomposed and/or burns out, forming an at least partially open-pore structure.

2. Method according to Claim 1, **characterized in that** the mixture (22) is sprayed on by means of gas atomization, preferably by means of compressed air (30), electrostatic or ultrasound atomization.

3. Method according to Claim 2, **characterized in that** the gas atomization of the mixture (22) is carried out at a pressure of at least about 0.5 bar, preferably at 1.5 to 3 bar.

4. Method according to one of Claims 1 to 3, **characterized in that** the mixture (22) is sprayed on with a droplet diameter of 1 to 150 µm, preferably 2 to 6 µm.

5. Method according to one of Claims 1 to 4, **characterized in that** the mixture (22) is sprayed on with a raw material (14) having at least one metallic component from an alkali metal, alkaline earth metal, lanthanoid, actinoid, transition metal or semimetal and an inorganic component composed of a halide, oxide, hydroxide, nitrate, sulphate or perchlorate and/or an organic component composed of an acetate, acetylacetonate, formate, oxalate, carbonate or ethoxide.

6. Method according to one of Claims 1 to 5, **characterized in that** the mixture (22) is sprayed on with the pore former (18), which is composed of at least one substance which can be decomposed thermally or can be burned, composed of finely dispersed carbon, in particular carbon black or graphite, or of an organic substance, preferably a polymer, with a molar mass of < 6000 g/mol, in particular < 1000 g/mol.

7. Method according to Claim 6, **characterized in that** the substrate (34) is heated directly to the pyrolysis temperature (T) during the spraying-on process.

8. Method according to one of Claims 1 to 7, **characterized in that** the mixture (22) is sprayed on with a proportion by weight of the pore former of 0.001 to 70% of the raw material (14) and with a grain size of at most 10 000 nm, preferably at most 200 nm, until a layer thickness of 0.5 to 50 times the pore diameter is achieved.

9. Method according to one of Claims 1 to 8, **characterized in that** a mixture (22) which is doped with metal particles and/or alloy particles is sprayed on.

10. Method according to one of Claims 1 to 9, **characterized in that** the pore former (18) is decomposed and/or burnt out at a temperature of at least 100°C, preferably at 100 to 500°C, and in particular at 250 to 350°C.

11. Method according to one of Claims 1 to 10, **characterized in that** the thin film (36') is subjected to yet another heat treatment after the pyrolysis, preferably at between 500°C and 1200°C, and in particular between 600°C and 800°C.

12. Use of the method according to one of Claims 1 to 11 for production of miniaturized appliances, in particular fuel cells and gas sensors (40), electrochemically active layers, electrodes, adhesion layers, gas diffusion layers and mechanical protective layers.

## Revendications

1. Procédé de revêtement d'un substrat (34) essentiellement plat par au moins un film mince (36') constitué d'au moins une couche en céramique poreuse (S'₁, S'₂, S'₃),
**caractérisé en ce que**
une solution ou une suspension d'un composé métallique organique et/ou minéral qui sert de matériau de départ (14) est mélangée avec un agent insoluble (18) de formation de pores et
**en ce que** le mélange (22) est pulvérisé sous la forme d'une couche (S₁, S₂, S₃) d'un film mince (36) et l'agent (18) de formation de pores est décomposé thermiquement et/ou brûlé au moins en partie pour former une structure à porosité au moins partiellement ouverte.

2. Procédé selon la revendication 1, **caractérisé en ce que** la pulvérisation du mélange (22) s'effectue par pulvérisation à l'aide d'un gaz, de préférence d'air comprimé (30), par pulvérisation électrostatique ou par pulvérisation sous ultrasons.

3. Procédé selon la revendication 2, **caractérisé en ce que** la pulvérisation par un gaz du mélange (22) s'effectue à une pression d'au moins environ 0,5 bar et de préférence de 1,5 à 3 bars.

4. Procédé selon l'une des revendications 1 à 3, **caractérisé en ce que** le mélange (22) est pulvérisé en gouttes d'un diamètre de 1 à 150 µm et de préférence de 2 à 6 µm.

5. Procédé selon l'une des revendications 1 à 4, **caractérisé en ce que** le mélange (22) est pulvérisé avec un matériau de départ (14) qui contient au moins un composant métallique de l'ensemble constitué des métaux alcalins, des métaux alcalinoterreux, des lanthanoïdes, des actinoïdes, des métaux de transition ou des semi-métaux, d'un composant minéral constitué d'un halogénure, d'un oxyde, d'un hydroxyde, d'un nitrate, d'un sulfate et/ou d'un perchlorate et/ou d'un composant organique constitué d'un acétate, d'un acétylacétonate, d'un formiate, d'un oxalate, d'un carbonate ou d'un éthoxyde.

6. Procédé selon l'une des revendications 1 à 5, **caractérisé en ce que** le mélange (22) est pulvérisé avec l'agent (18) de formation de pores qui contient au moins une substance thermiquement décomposable ou combustible, en carbone finement dispersé, en particulier en suie ou en graphite, ou en une substance organique, de préférence un polymère, dont la masse molaire est < 6000 g/mole et en particulier < 1000 g/mole,

7. Procédé selon la revendication 6, **caractérisé en ce que** le substrat (34) est chauffé directement à la température de pyrolyse (T) pendant la pulvérisation.

8. Procédé selon l'une des revendications 1 à 7, **caractérisé en ce que** le mélange (22) est pulvérisé avec une proportion pondérale d'agent de formation de pores de 0,001 à 70 % du matériau de départ (14) et en grains d'une taille d'au plus 10 000 nm et de préférence d'au plus 200 nm, jusqu'à obtenir une couche dont l'épaisseur représente de 0,5 à 50 fois le diamètre des pores.

9. Procédé selon l'une des revendications 1 à 8, **caractérisé en ce que** l'on pulvérise un mélange (22) dopé par des particules de métal et/ou d'alliage.

10. Procédé selon l'une des revendications 1 à 9, **caractérisé en ce que** l'agent (18) de formation des pores est décomposé et/ou brûlé à une température d'au moins 100°C, de préférence de 100 à 500°C et en particulier de 250 à 350°C.

11. Procédé selon l'une des revendications 1 à 10, **caractérisé en ce qu'**après la pyrolyse, le film mince (36') subit encore un autre traitement thermique, de préférence entre 500°C et 1200°C et en particulier entre 600°C et 800°C.

12. Utilisation des procédés selon l'une des revendications 1 à 11 pour fabriquer des appareils miniaturisés, en particulier des cellules à combustible et des sondes de gaz (40) , des couches électrochimiquement actives, des électrodes, des couches d'adhérence, des couches de diffusion de gaz ou des couches de protection mécanique.
